# EUROPÄISCHE PATENTSCHRIFT

(11) **EP 2 609 662 B1**
(45) Veröffentlichungstag und Bekanntmachung des Hinweises auf die Patenterteilung: **18.07.2018**
(21) Anmeldenummer: 11749776.8
(22) Anmeldetag: 02.08.2011
(51) Int. Cl.: H02J 1/10, H02J 9/06, H02M 3/335, H02M 1/00

(54) **REGELSCHALTUNG FÜR EIN HILFSNETZTEIL UND NETZTEILANORDNUNG**
CONTROL CIRCUIT FOR AN AUXILIARY POWER SUPPLY UNIT, AND POWER SUPPLY UNIT ARRANGEMENT
CIRCUIT DE RÉGULATION POUR UN BLOC D'ALIMENTATION SECONDAIRE ET ENSEMBLE BLOC D'ALIMENTATION

(30) Priorität: 23.08.2010 DE 102010035112
(43) Veröffentlichungstag der Anmeldung: 03.07.2013
(73) Patentinhaber: Fujitsu Limited, Kawasaki-shi Kanagawa 211-8588 (JP)
(72) Erfinder: BUSCH, Peter, 86179 Augsburg (DE)
(74) Vertreter: Epping - Hermann - Fischer
(86) Internationale Anmeldenummer: PCT/EP2011/063312
(87) Internationale Veröffentlichungsnummer: WO 2012/025347

(56) Entgegenhaltungen:
- DE-A1- 19 722 125
- US-A- 4 628 433
- US-A1- 2006 139 965

## Beschreibung

Die Erfindung betrifft eine Regelschaltung für ein Hilfsnetzteil umfassend einen Regelkreis zur Regelung eines Spannungswandlers des Hilfsnetzteils über eine Regelgröße. Darüber hinaus betrifft die Anmeldung eine Netzteilanordnung umfassend wenigstens ein Hauptnetzteil und wenigstens ein Hilfsnetzteil.

Netzteilanordnungen mit einem Hauptnetzteil und einem Hilfsnetzteil sind aus dem Stand der Technik bekannt. Insbesondere sind elektronische Geräte mit einem vollständig eingeschalteten Zustand und einem so genannten Standby- oder Bereitschaftszustand und einer derartigen Netzteilanordnung bekannt. Dabei übernimmt das Hilfsnetzteil die Versorgung des elektronischen Geräts in dem Bereitschaftszustand, und das Hauptnetzteil übernimmt die elektrische Versorgung des elektronischen Geräts in dem Betriebszustand.

Ein Problem bekannter Netzteilanordnungen besteht darin, die Spannung des Hilfsnetzteils und die Spannung des Hauptnetzteils auf einen gemeinsamen Ausgang der Netzteilanordnung einzuspeisen.

Die Bereitstellung einer Spannung eines Hilfsnetzteils und eines Hauptnetzteils über einen gemeinsamen Ausgang weist mehrere Vorteile auf. Unter anderem kann auf die Vorsehung eines zusätzlichen elektrischen Kontakts zwischen einer Netzteilanordnung und dem elektronischen Gerät oder seinen internen Komponenten verzichtet werden, wenn die Ausgangsspannung des Hilfsnetzteils über einen elektrischen Ausgang des Hauptnetzteils bereitgestellt wird. Umgekehrt kann ein Ausgang eines Hilfsnetzteils im Betrieb stärker Belastet werden, wenn das Hauptnetzteil im eingeschalteten Zustand eine durch das Hauptnetzteil erzeugte Spannung zusätzlich zu einer durch das Hilfsnetzteil bereitgestellten Hilfsspannung über diesen Ausgang abgibt. Zusätzlich kann der verbraucherseitige Schaltungsaufwand in beiden Fällen reduziert werden.

Die DE 197 22 125 A1 betrifft ein Stromversorgungssystem, das aus lauter gleichen, parallel geschalteten Stromversorgungseinheiten aufgebaut sind, die jeweils eine Regelung einer Ausgangsspannung auf einer Ausgangsleitung, in die eine Entkopplungsdiode zur Entkopplung der einzelnen Stromversorgungseinheiten innerhalb des Stromversorgungssystems eingefügt ist, dadurch bewerkstelligen, dass mittels eines Spannungsreglers und eines Mittelwertbildners auf einer für alle an dem Stromversorgungssystem beteiligten Strom-versorgungseinheiten gemeinsamen Parallelsteuerbusleitung eine elektrische Führungsgröße zur Steuerung eines die Ausgangsspannung erzeugenden Leistungsteils erzeugt wird.

Die US 4,628,433 betrifft eine Steuerschaltung für über Dioden in Form einer ODER-Schaltung gekoppelte Stromversorgungen. Dabei sind mehrere gleichartige Netzteile über jeweils eine Einkoppeldiode mit einem gemeinsamen Ausgangsknoten gekoppelt.

Die US 2006/0139965 A1 betrifft eine Stromversorgungsvorrichtung und eine dazugehörige einzelne fotogekoppelte Regelschaltung. Ein Haupt- und ein Hilfswandler der Vorrichtung sind parallel zueinander angeschlossen. die einzelne Regelschaltung ist mit einem gemeinsamen Lastausgang verbunden, überwacht den Betriebszustand der Stromversorgungsvorrichtung und steuert den Haupt- und Hilfswandler entsprechend an. Der Hauptwandler und der Hilfswandler stellen gemeinsam eine Ausgangsleistung zur Verfügung, wenn die Stromversorgungsvorrichtung in einer normalen Betriebsart arbeitet.

Aufgabe der vorliegenden Erfindung ist es, eine verbesserte Netzteilanordnung sowie eine Regelschaltung für ein Hilfsnetzteil zu beschreiben, die eine Einkopplung einer Spannung auf einen gemeinsamen Ausgang einer Netzteilanordnung gestatten. Dabei soll die Energieeffizienz der Netzteilanordnung insgesamt beibehalten oder gegenüber bekannten Anordnungen verbessert werden.

Die oben genannte Aufgabe wird durch eine Regelschaltung für ein Hilfsnetzteil gelöst, die einen Regelkreis zur Regelung eines Spannungswandlers des Hilfsnetzteils über eine Regelspannung an einem internen Knoten des Regelkreises auf eine Sollspannung umfasst, wobei eine von dem Spannungswandler des Hilfsnetzteil erzeugte Spannung an einem ersten Knoten bereitgestellt wird, der elektrisch direkt mit einem gemeinsamen, ersten Ausgang verbunden ist. Dabei umfasst der Regelkreis eine Zusatzschaltung, die dazu eingerichtet ist, eine Veränderung der Regelgröße beim Bereitstellen einer externen Spannung eines Hauptnetzteils an dem gemeinsamen, ersten Ausgang zur Abgabe der von dem Hilfsnetzteil erzeugten Spannung zu begrenzen, wenn die externe Spannung die Sollspannung des Hilfsnetzteils übersteigt.

Der Spannungswandler des Hilfsnetzteils ist dazu eingerichtet, eine interne Spannung an dem internen Knoten zur Regelung des Spannungswandlers des Hilfsnetzteils bereitzustellen, und die Zusatzschaltung ist dazu eingerichtet, ein Ansteigen der von dem Spannungswandler des Hilfsnetzteils an dem internen Knoten bereitgestellten internen Spannung auf die an dem ersten Ausgang bereitgestellte externe Spannung zu verhindern. Dabei liegt die Regelspannung des Hilfsnetzteils geringfügig unter einer Regelspannung des Hauptnetzteils, so dass beim Betrieb des Hauptnetzteils eine Speisung des gemeinsamen, ersten Ausgangs durch das Hauptnetzteil erfolgt

Eine derartige Regelschaltung erlaubt eine korrekte Regelung eines Hilfsnetzteils unabhängig vom Anliegen einer externen Spannung an einem gemeinsam genutzten Ausgang. Mit anderen Worten kann eine Falschregelung des Hilfsnetzteils durch eine Beeinflussung des Regelkreises des Hilfsnetzteils vermieden werden, wenn an einem Ausgang des Hilfsnetzteils eine externe Spannung, insbesondere eine Ausgangsspannung eines Hauptnetzteils, bereitgestellt wird. Insbesondere kann verhindert werden, dass das Hilfsnetzteil eine zu große oder zu kleine Spannung erzeugt, als zum Aufrechterhalten einer gewünschten Spannung an dem ersten Ausgang erforderlich ist.

Durch die Begrenzung der Spannung an einem internen Knoten des Hilfsnetzteils kann eine Störung des Regelkreises durch Anlegen einer externen Spannung vermieden werden. Auch auf diese Weise wird eine vollständige Deaktivierung des Hilfsnetzteils in dem Fall vermieden, dass eine externe Spannung an einem ersten Ausgang des Hilfsnetzteils bereitgestellt wird.

Gemäß einer vorteilhaften Ausgestaltung umfasst die Regelgröße ein Tastverhältnis zur Ansteuerung des Spannungswandlers des Hilfsnetzteils, wobei die Schaltung dazu eingerichtet ist, ein Abfallen des Tastverhältnisses auf 0% unabhängig vom Anlegen der externen Spannung zu verhindern. Eine derartige Schaltung weist den Vorteil auf, dass das Hilfsnetzteil auch beim Anliegen einer externen Spannung stets einsatzbereit bleibt und somit beim Abschalten der externen Spannung die Spannung an dem ersten Ausgang aufrechterhalten werden kann.

Gemäß einer weiteren vorteilhaften Ausgestaltung ist die Regelschaltung durch einen ersten Spannungsteiler zum Teilen einer Spannung zwischen dem ersten Ausgang des Hilfsnetzteils und einem gemeinsamen Bezugspotenzial und einem zweiten Spannungsteiler zum Teilen einer Spannung zwischen dem internen Knoten und dem gemeinsamen Bezugspotenzial gekennzeichnet. Durch die Verwendung zweier unterschiedlicher Spannungsteiler kann elektrisch zwischen der Ausgangsspannung an einem gemeinsamen Ausgang und einer internen Regelspannung des Hilfsnetzteils unterschieden werden. Dies gestattet insbesondere die Regelung des Hilfsnetzteils auf Grundlage des zweiten Spannungsteilers, unabhängig vom Anlegen einer Spannung an dem ersten Spannungsteiler.

Die oben genannte Aufgabe wird ebenso gelöst durch eine Netzteilanordnung, umfassend wenigstens ein Hauptnetzteil zum Bereitstellen wenigstens einer ersten Betriebsspannung zum Versorgen eines elektrischen Verbrauchers in einem ersten Betriebszustand und wenigstens ein Hilfsnetzteil zum Bereitstellen wenigstens einer zweiten Betriebsspannung zum Versorgen des elektrischen Verbrauchers in einem zweiten Betriebszustand. Dabei weist der elektrische Verbraucher in dem zweiten Betriebszustand eine geringere Leistung auf als in dem ersten Betriebszustand und eine Sollspannung des Hilfsnetzteils liegt geringfügig unter einer Regelspannung der Hauptnetzteils. Die wenigstens eine erste Betriebsspannung des Hauptnetzteils und die wenigstens eine zweite Betriebsspannung des Hilfsnetzteils werden dem elektrischen Verbraucher über einen gemeinsamen elektrischen Ausgang zur Verfügung gestellt. Das Hilfsnetzteil umfasst eine Regelschaltung gemäß einer der obigen Ausgestaltungen.

Durch eine derartige Netzteilanordnung können die Ausgangsspannungen eines Hilfsnetzteils und eines Hauptnetzteils an einem gemeinsamen elektrischen Ausgang bereitgestellt werden.

Weitere vorteilhafte Ausgestaltungen sind in den abhängigen Ansprüchen sowie der nachfolgenden ausführlichen Beschreibung von Ausführungsbeispielen näher erläutert.

Die Erfindung wird nachfolgend anhand unterschiedlicher Ausführungsbeispiele unter Bezugnahme auf Figuren näher erläutert. Darin werden gleiche oder gleichartige Komponenten unterschiedlicher Ausführungsbeispiele mit denselben Bezugszeichen versehen. In den Figuren zeigen:
- Figur 1: eine erste Schaltung zur Einkopplung einer Ausgangsspannung eines Hilfsnetzteils auf einen Ausgang eines Hauptnetzteils,
- Figur 2: eine zweite Schaltung zur Einkopplung einer Ausgangsspannung eines Hauptnetzteils auf einen Ausgang eines Hilfsnetzteils,
- Figur 3: eine dritte Schaltung zur Einkopplung einer Ausgangsspannung eines Hilfsnetzteils auf einen Ausgang eines Hauptnetzteils,
- Figur 4: eine vierte Schaltung zur Einkopplung einer Ausgangsspannung eines Hauptnetzteils auf einen Ausgang eines Hilfsnetzteils,
- Figur 5: eine fünfte Schaltung zur Einkopplung einer Ausgangsspannung eines Hauptnetzteils auf einen Ausgang eines Hilfsnetzteils,
- Figur 6: eine sechste Schaltung zur Einkopplung einer Ausgangsspannung eines Hilfsnetzteils auf einen Ausgang eines Hauptnetzteils und
- Figur 7: eine siebte Schaltung zur Einkopplung einer Ausgangsspannung eines Hauptnetzteils auf einen Ausgang eines Hilfsnetzteils.

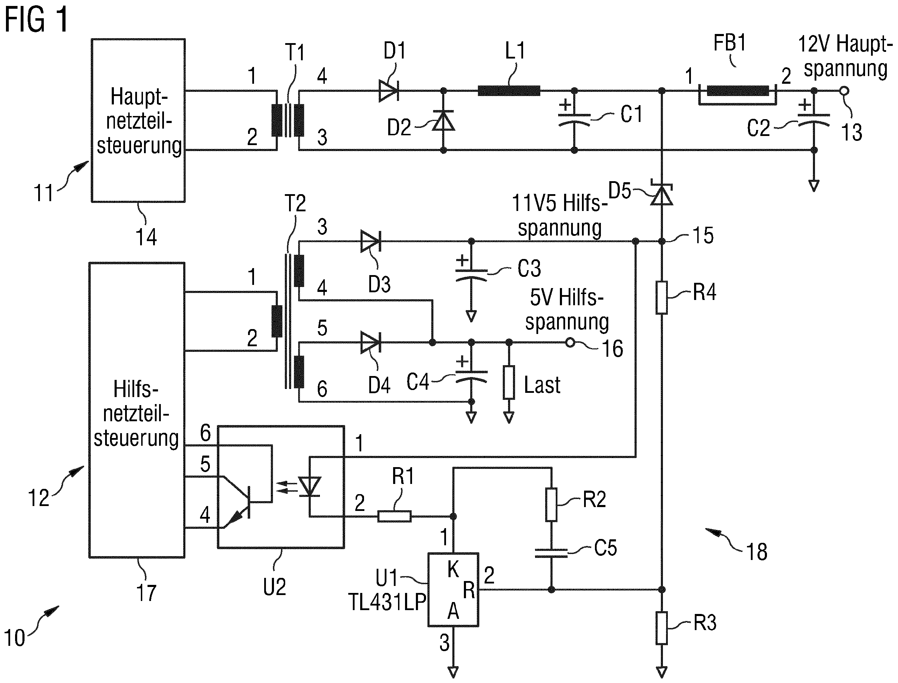

Figur 1 zeigt eine erste, nicht beanspruchte Netzteilanordnung 10, umfassend ein Hauptnetzteil 11 und ein Hilfsnetzteil 12. Das Hauptnetzteil 11 und das Hilfsnetzteil 12 arbeiten weitgehend unabhängig voneinander, geben ihre jeweiligen Ausgangsspannungen jedoch zumindest teilweise über einen gemeinsamen ersten Ausgang 13 ab. Typischerweise weist das Hilfsnetzteil 12 eine erheblich kleinere Ausgangsleistung als das Hauptnetzteil 11 auf.

Im Ausführungsbeispiel handelt es sich bei dem Hauptnetzteil 11 um ein Schaltnetzteil, das nach dem Prinzip eines Durchflusswandlers aufgebaut ist. Der Durchflusswandler umfasst einen Transformator T1, Dioden D1 und D2, eine Speicherspule L1 und einen Speicherkondensator C1. Ein Filterdrossel FB1 und ein Glättungskondensator C2 dienen zum Glätten der erzeugten Ausgangsspannung. An dem ersten Ausgang 13 wird durch das Hauptnetzteil 11 eine Versorgungsspannung von beispielsweise 12 V bereitgestellt. Die Höhe der Versorgungsspannung wird über eine nicht im Detail dargestellte Steuerschaltung 14 eingestellt.

Bei dem Hilfsnetzteil 12 handelt es sich im Ausführungsbeispiel um einen Schaltwandler vom Typ eines Sperrwandlers zur Erzeugung zwei unterschiedlicher Ausgangsspannungen. Zur Bereitstellung der Hilfsspannungen umfasst der Sperrwandler des Hilfsnetzteils 12 einen zweiten Transformator T2, zwei Gleichrichterdioden D3 bzw. D4, zwei Speicherkondensatoren C3 bzw. C4 und eine Steuerschaltung 17. Im dargestellten Ausführungsbeispiel arbeitet die Steuerschaltung 17 des Hilfsnetzteils 12 unabhängig von der Steuerschaltung 14 des Hauptnetzteils 11.

Über einen ersten Knoten 15 wird eine erste Hilfsspannung von beispielsweise 11,5 V bereitgestellt, also eine Spannung die geringfügig unter der Ausgangsspannung des Hauptnetzteils 11 liegt. Über einen zweiten Ausgang 16 wird eine zweite Hilfsspannung von beispielsweise 5 V bereitgestellt. An dem zweiten Ausgang 16 ist in der Schaltung gemäß Figur 1 ein symbolischer Lastwiderstand eingezeichnet, der unter anderem eine Stromaufnahme einer sekundären Last der Netzteilanordnung 10 selber oder eines daran angeschlossenen elektronischen Geräts von beispielsweise 1 mA darstellt.

Neben der Steuerschaltung 17 umfasst eine Regelschaltung des Hilfsnetzteils 12 einen Regelkreis 18. Der Regelkreis 18 umfasst im Ausführungsbeispiel einen Regelverstärker U1, einen Optokoppler U2, vier Widerstände R1, R2, R3 und R4 sowie einen Kondensator C5. Zur Regelung wird die erste Hilfsspannung am ersten Knoten 15 überwacht. Hierzu wird die erste Hilfsspannung über einen Spannungsteiler, umfassend die Widerstände R3 und R4, herunter geteilt. Eine Abweichung der herunter geteilten Spannung von einem Sollwert, beispielsweise 2,5 V, wird über den Regelverstärker U1 erfasst und verstärkt. Über den Optokoppler U2 wird das verstärkte Ausgangssignal an die Steuerschaltung 17 zur Pulsbreitenregelung auf der Primärseite des Hilfsnetzteils 12 weitergegeben. Dabei bewirkt ein höherer Strom im Optokoppler U2 ein niedrigeres Tastverhältnis der Steuerschaltung 17 zur Ansteuerung des Transformators T2 und umgekehrt.

Der erste Knoten 15 zur Abgabe der ersten Hilfsspannung von 11,5 V ist in der Schaltung gemäß Figur 1 über eine als Einkoppeldiode wirkende Schottky-Diode D5 und die Filterdrossel FB1 mit dem ersten Ausgang 13 des Hauptnetzteils 11 gekoppelt. Weil die Ausgangsspannung des Hauptnetzteils 11 im Ausführungsbeispiel etwa 0,5 V höher liegt als die erste Hilfsspannung sperrt die Diode D5 beim Betrieb des Hauptnetzteils 11. Hierdurch wird eine Störung des Regelkreises 18 des Hilfsnetzteils 12 durch die Ausgangsspannung des Hauptnetzteils 11 vermieden. Außerdem wird so sichergestellt, dass die elektrische Versorgung des an die Netzteilanordnung 10 angeschlossenen Geräts bei eingeschaltetem Hauptnetzteil 11 in jedem Fall über das Hauptnetzteil 11 erfolgt, das in der Regel einen besseren Wirkungsgrad aufweist als das Hilfsnetzteil 12.

Nachteilig an der dargestellten Lösung ist jedoch der zusätzliche Spannungsabfall an der Diode D5 bei abgeschaltetem Hauptnetzteil 11. Bei einer Schottky-Diode beträgt er zwar nur etwa 0,4 V. Dies führt insgesamt jedoch zu einer Wirkungsgradverschlechterung von ca. 5 % beim Betrieb des Hilfsnetzteils 12.

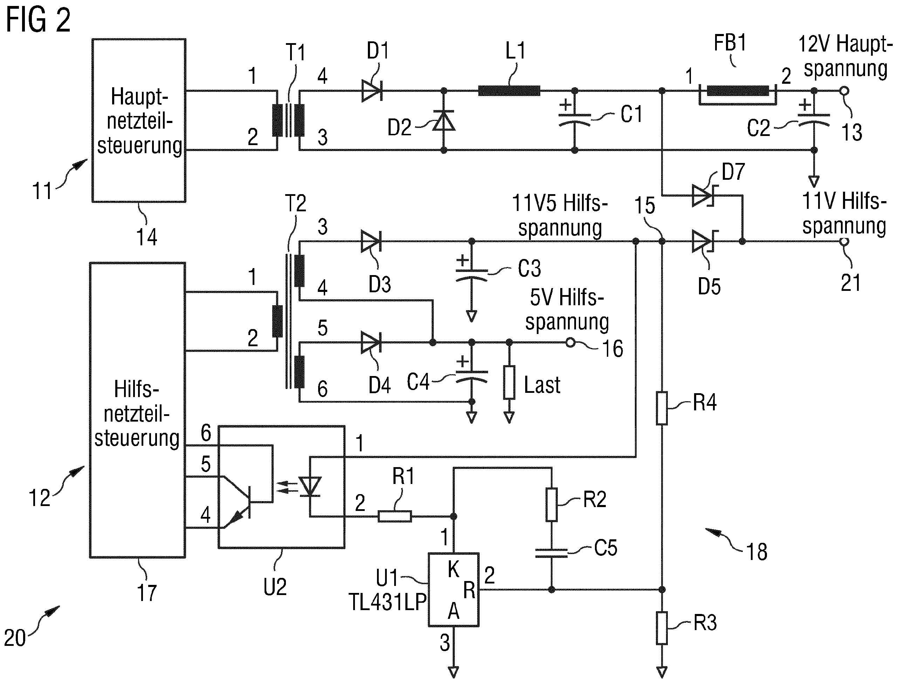

Figur 2 zeigt eine zweite, nicht beanspruchte Netzteilanordnung 20 für den Fall, dass eine Einspeisung einer Ausgangsspannung eines Hauptnetzteils 11 auf einen ersten Ausgang 21 des Hilfsnetzteils 12 vorgenommen werden soll. Der Aufbau des Hauptnetzteils 11 und des Hilfsnetzteils 12 entspricht im dargestellten Ausführungsbeispiel weitgehend dem der ersten Netzteilanordnung 10 gemäß Figur 1.

In der zweiten Netzteilanordnung 20 werden ausgangsseitig sowohl das Hauptnetzteil 11 als auch das Hilfsnetzteil 12 über eine Schottky-Diode D7 bzw. D5 mit dem gemeinsamen ersten Ausgang 21 des Hauptnetzteils 12 verbunden. Durch die Diode D5 werden, wie unter Bezugnahme auf die Figur 1 beschrieben, ungewünschte Rückkopplungen in den Regelkreis 18 des Hilfsnetzteils 12 vermieden. Durch die Diode D7 wird die sekundäre Ausgangsspannung des Durchflusswandlers des Hauptnetzteils 11 von circa 12 V auf eine Spannung von circa 11,6 V am ersten Ausgang 21 herabgesetzt.

Auch in diesem Fall führt die Verwendung der zusätzlichen Einkoppeldiode D5 jedoch zu einer Verschlechterung des Wirkungsgrads des Hilfsnetzteils 12 beim Bereitstellen der Hilfsspannung über den ersten Ausgang 21.

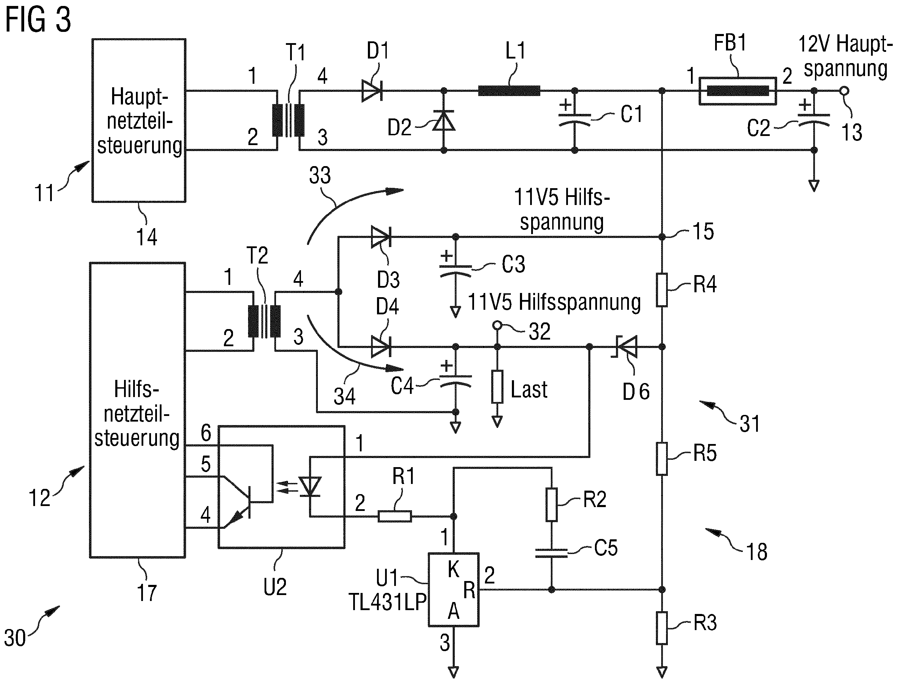

Um eine weitere Verbesserung der Energieeffizienz der Netzteilanordnungen zu bewirken, wird in den nachfolgenden Schaltungen gemäß den Figuren 3 bis 7 auf die Verwendung von Einkoppeldioden verzichtet. Hierbei ergibt sich das zusätzliche Problem, dass nun eine eventuell von dem Hauptnetzteil 11 bereitgestellte Spannung den Regelkreis 18 des Hilfsnetzteils 12 einer Netzteilanordnung stören würde. Insbesondere würde der Regelverstärker U1 fälschlicherweise eine zu hohe Ausgangsspannung des Sperrwandlers an die Steuerschaltung 17 zurückmelden, was zu einem Absenken des Tastverhältnisses auf 0 % führen würde. In diesem Fall kann nicht mehr gewährleistet werden, dass das Hilfsnetzteil 12 schnell genug startet, um eine Spannungsversorgung auch beim Abschalten des Hauptnetzteils 11 sicherzustellen.

In der Figur 3 ist eine verbesserte, dritte Netzteilanordnung 30 umfassend ein Hauptnetzteil 11 und ein Hilfsnetzteil 12 dargestellt. Das Hauptnetzteil 11 entspricht dabei im Aufbau dem der Anordnung 10 gemäß Figur 1. Das Hilfsnetzteil 12 weist wiederum einen Sperrwandler auf, der im Unterschied zur Figur 1 jedoch nur einen ersten Teil zum Bereitstellen der ersten Hilfsspannung von 11,5 V umfasst, nicht jedoch einen weiteren zweiten Teil zum Bereitstellen einer zweiten Hilfsspannung von 5 V.

Auch in diesem Ausführungsbeispiel liegt eine Sollspannung des Hilfsnetzteils 12 geringfügig unter der Regelspannung des Hauptnetzteils 11. Im Ausführungsbeispiel beträgt der Unterschied 0,5 V also etwas mehr als 4 Prozent. Allgemein bietet sich eine Absenkung von beispielsweise 0,3 bis 1,8 Volt oder 2,5 bis 15 Prozent an. Durch die Absenkung kann unter anderem gewährleistet werden, dass beim Betrieb des Hauptnetzteils 11 eine Speisung des gemeinsamen Ausgangs in jedem Fall durch das Hauptnetzteil 11 erfolgt.

Zur Vermeidung einer Störung eines Regelkreises 18 und insbesondere zum Vermeiden eines Absenken des Tastverhältnisses des Sperrwandler des Hilfsnetzteils 12 durch eine Steuerschaltung 17 auf ein Tastverhältnis von 0 % ist in der dritten Netzteilanordnung 30 gemäß Figur 3 eine zusätzliche Schaltung 31 vorgesehen, die ein Ansteigen einer internen Spannung an einem internen Knoten 32 auf eine externe Spannung des Hauptnetzteils 11 wie an einem ersten Knoten 15 verhindert.

Insbesondere umfasst das Hilfsnetzteil 12 nun einen ersten elektrischen Pfad 33 zum Bereitstellen der Ausgangsspannung des Hilfsnetzteils 12 an dem ersten Knoten 15 zur Einspeisung der Spannung des Hilfsnetzteils 12 in den ersten Ausgang 13 des Hauptnetzteils 11. Darüber hinaus umfasst das Hilfsnetzteil 12 einen zweiten elektrischen Pfad 34 zum Bereitstellen der durch das Hilfsnetzteil 12 erzeugten Spannung an dem internen Knoten 32. Die Spannung am Knoten 32 kann beispielsweise zur elektrischen Versorgung eines Mikrocontrollers der Netzteilanordnung 30 verwendet werden.

Gegenüber der Schaltung gemäß Figur 1 wird der Widerstandsteiler zwischen dem ersten Knoten 15 und dem Massepotential um einen zusätzlichen Widerstand R5 erweitert, der über eine zusätzliche Diode D6 eine durch Anlegen einer externen Spannung an dem ersten Knoten 15 verfälschte Rückmeldung korrigiert.

Wird das Hauptnetzteil 11 eingeschaltet, meldet der Spannungsteiler zwar zunächst die Ausgangsspannung von 12 V des Hauptnetzteils, jedoch wird bei daraufhin fallendem Tastverhältnis des Schaltwandlers des Hilfsnetzteils 12 die Spannung an dem internen Knoten 32 so weit abfallen, bis die zusätzliche Diode D6 zwischen den Widerständen R4 und R5 und dem internen Knoten 32 leitend wird. Wenn die Diode D6 leitet, wird die Ausgangsspannung des Hilfsnetzteils 12 über einen zweiten Spannungsteiler zwischen dem internen Knoten 32 und dem Massepotential, umfassend die Diode D6, den Widerstand R5 und den Widerstand R3, durch den Regelverstärkers U1 bestimmt. Dabei müssen die Widerstände R3, R4 und R5 so dimensioniert werden, dass die Sollspannung zwischen R3 und R5 auch in diesem Fall beispielsweise auch etwa 2,5 V beträgt. Das bedeutet, dass die Ausgangsspannung des Schaltwandlers des Hilfsnetzteils 12 nicht weiter als auf beispielsweise 11 V oder 10,5 V absinkt. Auf diese Weise wird vermieden, dass das Tastverhältnis des Regelkreises 18 auf 0 % absinkt und das Hilfsnetzteil 12 sich völlig abschaltet.

Da die verwendeten zusätzlichen Bauteile nicht in dem für die elektrische Versorgung vorgesehenen ersten elektrischen Pfad 33 angeordnet sind, können preisgünstige Kleinsignalbauteile verwendet werden und es entsteht nur eine minimale Verlustleistung. Bei der Dimensionierung des Widerstandes R4 muss beachtet werden, dass der Strom durch den Widerstand R4 so klein sein muss, dass er die Spannung an dem internen Knoten 32 nicht so weit anhebt, um ein Nachladen des Speicherkondensators C4 über die Diode D4 des Sperrwandlers zu verhindern. Des Weiteren soll der Widerstand R4 wesentlich kleiner sein als der Widerstand R5, damit die Spannung im Fall des inneren Regelkreises über die Komponenten C4, D6, R5, R3 und U1 nicht wesentlich niedriger ist als die Spannung, die sich bei Regelung über den äußeren Regelkreis umfassend die Komponenten C3, R4, R5, R3 und U1 einstellt. Im Ergebnis bedeutet dies, dass die Summe der Widerstände R4 und R5 nur wenig größer sein darf als der Widerstand R5 für sich allein genommen.

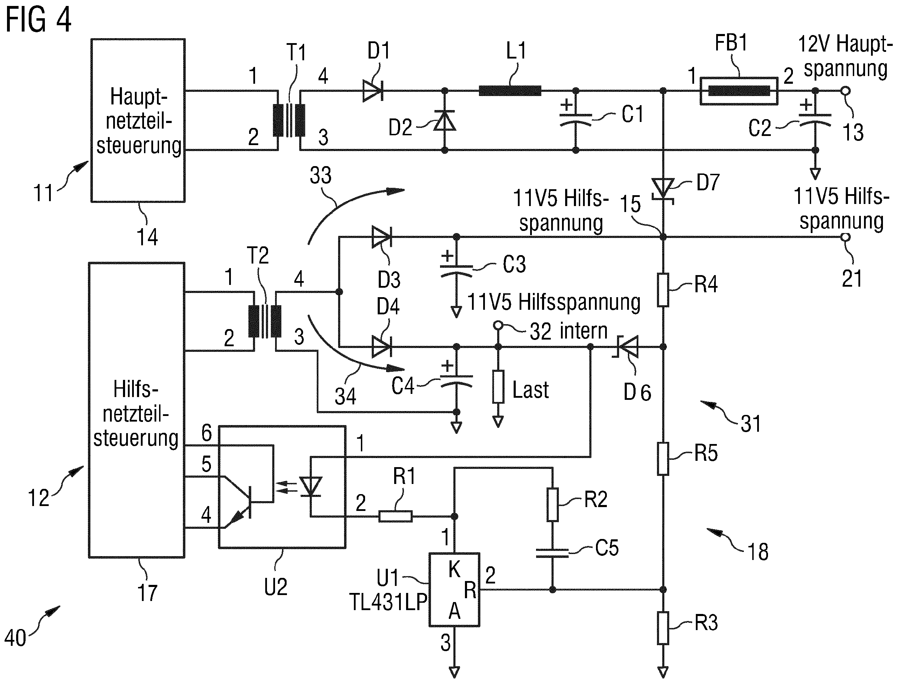

In der Figur 4 ist eine vierte Netzteilanordnung 40 dargestellt, die auf der Netzteilanordnung 20 gemäß Figur 2 beruht. Allerdings stellt das Hilfsnetzteil 12, wie unter Bezugnahme auf die Figur 3 erläutert, wiederum nur eine einzige Ausgangsspannung von beispielsweise 11,5 V bereit.

Auch die Netzteilanordnung 40 gemäß Figur 4 wurde durch eine zusätzliche Schaltung 31 so erweitert, dass beim Einspeisen einer Spannung des Hauptnetzteils 11 über eine Diode D7 auf einen ersten Ausgang 21 des Hilfsnetzteils 12 eine Störung des Regelkreises 18 vermieden wird. Dabei entsprechen der Aufbau und die Regelung der zusätzlichen Schaltung 31 den zuvor bezüglich der Netzteilanordnung 30 gemäß Figur 3 beschriebenen Komponenten.

Anders als in dem Regelkreis 18 des Hilfsnetzteils 12 ist eine entsprechende Ergänzung im in der Figur 4 nicht dargestellten Regelkreis des Hauptnetzteils 11 nicht nötig. Einerseits wirkt die zum Herabsetzen der Spannung des Hauptnetzteils 11 verwendete Diode D7 ohnehin als Sperre. Andererseits ist die Ausgangsspannung des Hilfsnetzteils 12 an dem ersten Knoten 15 niedriger als die Regelspannung des Hauptnetzteils 11, sodass ein Abregeln des Schaltwandlers des Hauptnetzteils 11 bei gleichzeitigem Betrieb des Hilfsnetzteils 12 ohnehin nicht erfolgen würde.

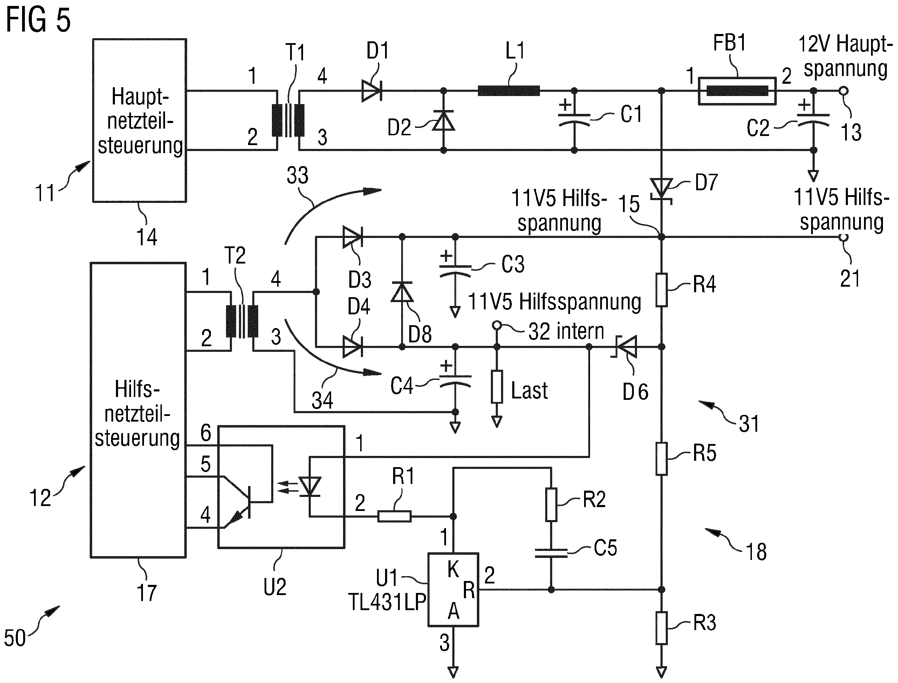

Gemäß einer weiteren, in der Figur 5 dargestellten fünften Ausgestaltung einer Netzteilanordnung 50 kann eine zusätzliche Diode D8 vom Pluspol des Speicherkondensators C4 auf den Speicherkondensator C3 angeordnet werden, um eine etwaige Überspannung des zweiten elektrischen Pfades 34 in den ersten elektrischen Pfad 33 abzuleiten. Dabei muss die Anode der zusätzlichen Diode D8 mit dem Speicherkondensator C4 und die Kathode der zusätzlichen Diode D8 mit dem Speicherkondensator C3 verbunden werden. Ansonsten entspricht die Ausgestaltung gemäß Figur 5 der in der Figur 4 dargestellten vierten Netzteilanordnung 40.

Die Netzteilanordnung 50 gemäß Figur 5 eignet sich insbesondere, wenn aufgrund von Schaltspitzen des Transformators T2 bei niedriger Last über den zweiten elektrischen Pfad 34 und einer gleichzeitig hohen Last über den ersten elektrischen Pfad 33 eine zu hohe Spannung an dem internen Knoten 32 aufgebaut wird.

Eine äquivalente Schutzschaltung umfassend eine zusätzliche Diode D8 kann auch in der Netzteilanordnung 30 gemäß Figur 3 eingesetzt werden. Diese ist der Einfachheit halber jedoch nicht bildlich dargestellt.

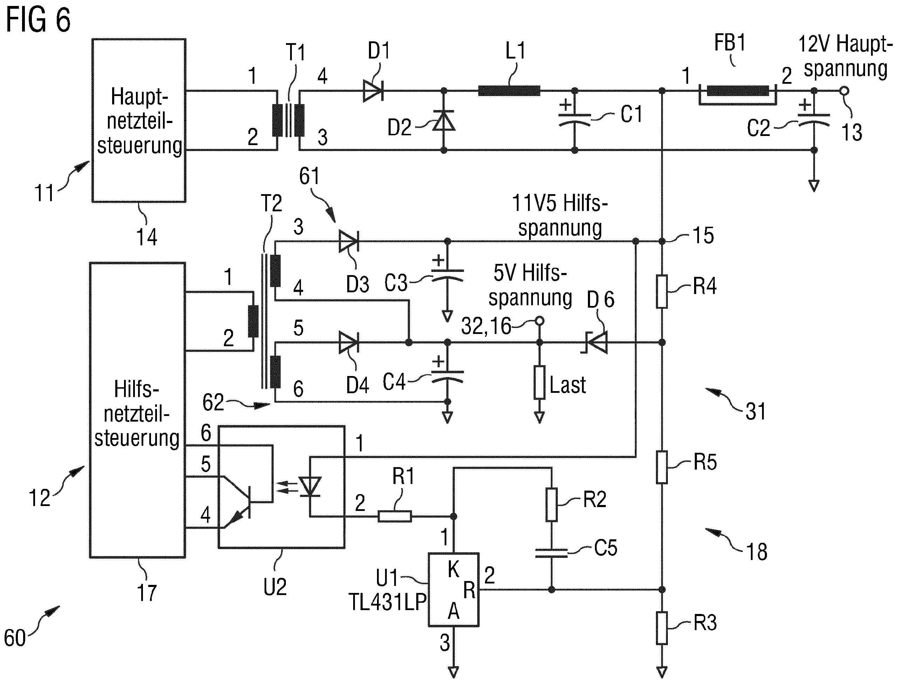

Figur 6 zeigt eine Ausgestaltung einer sechsten Netzteilanordnung 60. Die sechste Netzteilanordnung entspricht im Wesentlichen der ersten Netzteilanordnung 10. Insbesondere stellt das Hilfsnetzteil 12 gemäß Figur 6 über einen ersten Teil 61 und einen zweiten Teil 62 einer Wandlerschaltung zwei unterschiedliche Hilfsspannungen von 11,5 V und 5 V an einem ersten Knoten 15 beziehungsweise einem zweiten Ausgang 16 bereit. Wie in der Netzteilanordnung 30 gemäß Figur 3 wird der erste Knoten 15 ohne Verwendung einer Einkoppeldiode mit einem ersten Ausgang 13 eines Hauptnetzteils 11 verbunden, um die erste Hilfsspannung von 11,5 V des Hilfsnetzteils 12 in einem Bereitschaftszustand über den gemeinsamen ersten Anschluss 13 des Hauptnetzteils 11 bereitzustellen.

Anders als in der Netzteilanordnung 30 gemäß Figur 3 wird im in der Figur 6 dargestellten Ausführungsbeispiel beim Anliegen einer externen Spannung des Hauptnetzteils 11 an dem ersten Knoten 15 die zweite Hilfsspannung von 5 V zur Erzeugung einer internen Spannung an einem internen Knoten 32 zur Regelung des Hilfsnetzteils 12 verwendet. Dabei übernimmt der zweite Teil 62 des Schaltwandlers zur Erzeugung der zweiten Hilfsspannung von 5 V die Funktion des zweiten elektrischen Pfads 34 gemäß Figur 3.

Hierzu wird die zweite Hilfsspannung von 5 V elektrisch über einer Zusatzschaltung 31 mit dem äußeren Regelkreis 18 verbunden. Insbesondere wird der interne Knoten 32 über eine Diode D6 mit einem Abgriff zwischen dem Widerstand R4 und einem zusätzlichen Widerstand R5 eines Spannungsteilers zwischen dem ersten Knoten 15 und dem Massepotential verbunden. Bei der Dimensionierung der Widerstände R3, R4 und R5 muss selbstverständlich das Verhältnis der ersten und zweiten Hilfsspannung entsprechend berücksichtigt werden. Insbesondere gilt hier nicht mehr die oben genannte Dimensionierungsregel, dass der Widerstand R4 wesentlich kleiner sein muss als der Widerstand R5. Der Widerstand R4 muss aber weiterhin so groß dimensioniert werden, dass er die Spannung am internen Knoten 32 bei Betrieb des Hauptnetzteils nicht so weit anhebt, dass der Regelkreis 18 das Tastverhältnis auf 0 % herabsetzt. Auch in diesem Fall erfolgt dann eine Regelung des Hilfsnetzteils 12 auf Grundlage der Spannung am internen Knoten 32 anstelle der Spannung am ersten Knoten 15 bei abgeschalteten Hauptnetzteil 11. Bezüglich der Funktion des Schaltkreises wird auf das bezüglich der Netzteilanordnung 30 oben Gesagte verwiesen.

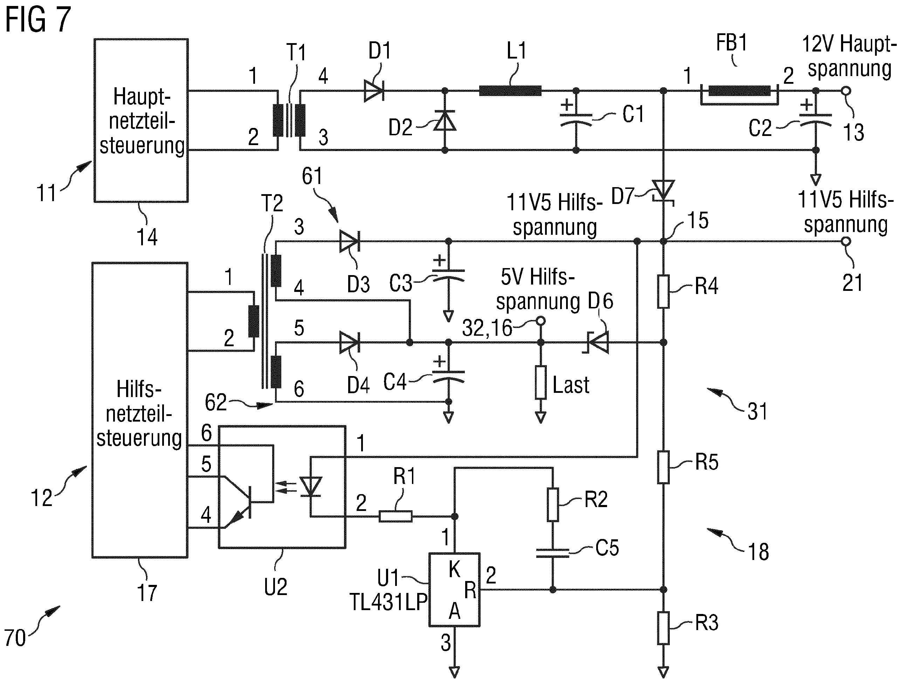

Figur 7 zeigt schließlich eine siebte Netzteilanordnung 70, bei der, wie in Figur 2, wiederum eine Ausgangsspannung eines Hauptnetzteils 11 auf einen ersten Ausgang 21 eines Hilfsnetzteils 12 eingekoppelt wird. Hierzu wird, wie schon in den Netzteilanordnungen 20, 40 und 50, eine Diode D7 verwendet. Um auch in diesem Fall eine Störung des Regelkreises 18 des Hilfsnetzteils 12 zu vermeiden, wird wiederum, wie unter Bezugnahme auf die Figur 6 oben beschrieben, eine von einem zweiten Teil 62 des Schaltwandlers erzeugte zweite Hilfsspannung des Hilfsnetzteils 12 von 5 V als Bezugspotenzial für die Regelung der Steuerschaltung 17 verwendet, wenn an einem ersten Knoten 15 eine Spannung des Hauptnetzteils 11 anliegt.

Die Erfindung ist nicht auf die dargestellten Ausführungsbeispiele beschränkt. Insbesondere eignet sich eine anspruchsgemäße Regelschaltung zur Verwendung in beliebigen Netzteilanordnungen mit zwei oder mehr Netzteilen, bei denen die Ausgangsspannungen unterschiedlicher Netzteile über einen gemeinsamen Ausgang abgegeben werden sollen.

Auch die in den Ausführungsbeispielen beschriebenen Wandlerschaltungen des Hauptnetzteils und des Hilfsnetzteils besitzen nur beispielhaften Charakter.

Darüber hinaus ist es unerheblich, ob durch die beschriebenen zusätzlichen Schaltungen das Absinken bzw. Ansteigen einer Spannung oder eines Stroms zur Regelung des Hilfsnetzteils bewirkt wird, solange ein Regelkreis des Hilfsnetzteils elektrisch zumindest teilweise von einer Beeinflussung bewahrt wird, die durch ein Anlegen einer externen Spannung an einem gemeinsamen Ausgang verursacht wird.

### Bezugszeichenliste

- 10: erste Netzteilanordnung
- 11: Hauptnetzteil
- 12: Hilfsnetzteil
- 13: erster Ausgang (des Hauptnetzteils)
- 14: Steuerschaltung (des Hauptnetzteils)
- 15: erster Knoten
- 16: zweiter Ausgang (des Hilfsnetzteils)
- 17: Steuerschaltung (des Hilfsnetzteils)
- 18: Regelkreis
- 20: zweite Netzteilanordnung
- 21: erster Ausgang (des Hilfsnetzteils)
- 30: dritte Netzteilanordnung
- 31: Zusatzschaltung
- 32: interner Knoten
- 33: erster elektrischer Pfad
- 34: zweiter elektrischer Pfad
- 40: vierte Netzteilanordnung
- 50: fünfte Netzteilanordnung
- 60: sechste Netzteilanordnung
- 61: erster Teil (der Wandlerschaltung)
- 62: zweiter Teil (der Wandlerschaltung)
- 70: siebte Netzteilanordnung

## Patentansprüche

1. Regelschaltung für ein Hilfsnetzteil (12), umfassend einen Regelkreis (18) zur Regelung eines Spannungswandlers des Hilfsnetzteils (12) über eine Regelspannung an einem internen Knoten (32) des Regelkreises (18) auf eine Sollspannung, wobei eine von dem Spannungswandler des Hilfsnetzteil (12) erzeugte Spannung an einem ersten Knoten (15) bereitgestellt wird, der elektrisch direkt mit einem gemeinsamen, ersten Ausgang (13, 21) zur Abgabe der von dem Hilfsnetzteil (12) erzeugten Spannung verbunden ist, wobei der Regelkreis (18) eine Zusatzschaltung (31) umfasst, die dazu eingerichtet ist, eine Veränderung der Regelspannung beim Bereitstellen einer externen Spannung eines Hauptnetzteils (11) an dem gemeinsamen, ersten Ausgang (13, 21) zu begrenzen, wenn die externe Spannung die Sollspannung des Hilfsnetzteils (12) übersteigt, **dadurch gekennzeichnet, dass**
- der interne Knoten dazu eingerichtet ist, zur Regelung des Spannungswandlers im Betrieb eine interne Spannung vom Spannungswandler des Hilfsnetzteils zu erhalten,
- die Zusatzschaltung (31) dazu eingerichtet ist, ein Ansteigen der im Betrieb von dem Spannungswandler des Hilfsnetzteils (12) an dem internen Knoten (32) bereitgestellten internen Spannung auf die an dem ersten Ausgang (13, 21) bereitgestellte externe Spannung zu verhindern, und
- die Regelspannung des Hilfsnetzteils (12) im Betrieb geringfügig unter einer Regelspannung des Hauptnetzteils (11) liegt, so dass beim Betrieb des Hauptnetzteils (11) eine Speisung des gemeinsamen, ersten Ausgangs (13,21) durch das Hauptnetzteil (11) erfolgt.

2. Regelschaltung nach Anspruch 1,
**dadurch gekennzeichnet, dass**
die Regelgröße ein Tastverhältnis zur Ansteuerung des Spannungswandlers des Hilfsnetzteils (12) umfasst, wobei die Zusatzschaltung (31) dazu eingerichtet ist, ein Abfallen des Tastverhältnisses auf 0 % unabhängig vom Anliegen der externen Spannung zu verhindern.

3. Regelschaltung nach Anspruch 1 oder 2, **gekennzeichnet durch**
einen ersten elektrischen Pfad (33) zum Bereitstellen einer Ausgangsspannung des Spannungswandlers des Hilfsnetzteils (12) an einem ersten Ausgang (13, 21) und einen zweiten elektrischen Pfad (34) zum Bereitstellen der Ausgangsspannung des Spannungswandlers an dem internen Knoten (32) des Hilfsnetzteils (12).

4. Regelschaltung nach Anspruch 1 oder 2, **gekennzeichnet durch**
eine Wandlerschaltung mit einem ersten Teil (61) zum Bereitstellen einer ersten Ausgangsspannung des Spannungswandlers an dem ersten Ausgang (13, 21) und einem zweiten Teil (62) zum Bereitstellen einer zweiten Ausgangsspannung des Spannungswandlers an dem internen Knoten (32) und einem zweiten Ausgang (16) des Hilfsnetzteils (12).

5. Regelschaltung nach einem der Ansprüche 1 bis 4,
**gekennzeichnet durch**
einen ersten Spannungsteiler zum Teilen einer Spannung zwischen dem ersten Ausgang (13, 21) und einem gemeinsamen Bezugspotenzial und einen zweiten Spannungsteiler zum Teilen einer Spannung zwischen dem internen Knoten (32) und dem gemeinsamen Bezugspotenzial.

6. Regelschaltung nach Anspruch 5,
**dadurch gekennzeichnet, dass**
der erste Spannungsteiler jeweils ein zwischen den ersten Ausgang (13, 21) und das gemeinsame Bezugspotenzial in Reihe geschaltetes erstes, zweites und drittes Widerstandselement (R4, R5, R3) umfasst und der zweite Spannungsteiler das zwischen den internen Knoten (32) und das gemeinsame Bezugspotenzial in Reihe geschaltete zweite und dritte Widerstandselement (R5, R3) umfasst, wobei der Regelkreis (18) dazu eingerichtet ist, eine Regelspannung zwischen dem zweiten und dem dritten Widerstandselement (R5, R3) zu bestimmen.

7. Regelschaltung nach Anspruch 6,
**dadurch gekennzeichnet, dass**
der zweite Spannungsteiler zusätzlich ein zwischen den internen Knoten (32) und das zweite Widerstandselement (R5) geschaltete Diodenelement (D6) umfasst.

8. Regelschaltung nach einem der Ansprüche 1 bis 7,
**gekennzeichnet durch**
einen elektrisch zwischen den internen Knoten (32) und ein gemeinsames Bezugspotenzial geschalteten elektrischen Verbraucher des Hilfsnetzteils (12), insbesondere eine interne Last des Hilfsnetzteils (12) oder einen Messwiderstand.

9. Netzteilanordnung (30, 40, 50, 60, 70), umfassend
- wenigstens ein Hauptnetzteil (11) zum Bereitstellen wenigstens einer ersten Betriebsspannung zum Versorgen eines elektrischen Verbrauchers in einem ersten Betriebszustand und
- wenigstens ein Hilfsnetzteil (12) zum Bereitstellen wenigstens einer zweiten Betriebsspannung zum Versorgen des elektrischen Verbrauchers in einem zweiten Betriebszustand, wobei
- der elektrische Verbraucher in dem zweiten Betriebszustand eine geringere Leistung aufweist als in dem ersten Betriebszustand,
- eine Sollspannung des Hilfsnetzteils (12) geringfügig unter einer Regelspannung der Hauptnetzteils (11) liegt,
- die wenigstens eine erste Betriebsspannung des Hauptnetzteils (11) und die wenigstens eine zweite Betriebsspannung des Hilfsnetzteils (12) dem elektrischen Verbraucher über einen gemeinsamen ersten Ausgang (13, 21) der Netzteilanordnung (10, 20, 30, 40, 50, 60, 70) zur Verfügung gestellt werden und
- das Hilfsnetzteil (12) eine Regelschaltung gemäß einem der Ansprüche 1 bis 8 umfasst.

10. Netzteilanordnung (30, 40, 50, 60, 70) nach Anspruch 9, **dadurch gekennzeichnet, dass** das Hauptnetzteil (11) eine erste Steuerschaltung (14) und das Hilfsnetzteil (12) eine zweite, von der ersten Steuerschaltung (14) unabhängige Steuerschaltung (17) aufweist.

11. Netzteilanordnung (30, 60) nach Anspruch 9 oder 10, **gekennzeichnet, durch**
einen durch den ersten Ausgang (13) gebildeten Hauptausgang zum Versorgen des elektrischen Verbrauchers in dem ersten Betriebszustand und dem zweiten Betriebszustand, wobei in dem ersten Betriebszustand die erste Betriebsspannung des Hauptnetzteils (11) an dem Hauptausgang und in dem zweiten Betriebszustand die zweite Betriebsspannung des Hilfsnetzteils (12) an dem Hauptausgang bereitgestellt wird.

12. Netzteilanordnung (40, 50, 70) nach Anspruch 9 oder 10, **gekennzeichnet durch**
wenigstens einen Hauptausgang zum Versorgen des elektrischen Verbrauchers in dem ersten Betriebszustand und wenigstens einen durch den ersten Ausgang (21) gebildeten Hilfsausgang zum Versorgen des elektrischen Verbrauchers in dem ersten Betriebszustand und dem zweiten Betriebszustand, wobei in dem ersten Betriebszustand die erste Betriebsspannung des Hauptnetzteils (11) an dem Hauptausgang und dem Hilfsausgang und in dem zweite Betriebszustand die zweite Betriebsspannung des Hilfsnetzteils (12) an dem Hilfsausgang bereitgestellt wird.

## Claims

1. Closed-loop control circuit for an auxiliary power supply unit (12), comprising a control loop (18) for the closed-loop control of a voltage transformer of the auxiliary power supply unit (12) via a control voltage at an internal node (32) of the control loop (18) to a setpoint voltage, wherein a voltage generated by the voltage transformer of the auxiliary power supply unit (12) is provided at a first node (15), which is electrically directly connected to a common first output (13, 21) for outputting the voltage generated by the auxiliary power supply unit (12), wherein the control loop (18) includes an additional circuit (31), which is configured to limit a change of the control voltage in the event of provision of an external voltage of a main power supply unit (11) at the common first output (13, 21), if the external voltage exceeds the setpoint voltage of the auxiliary power supply unit (12),
**characterized in that**
- the internal node is configured to receive, during operation, an internal voltage from the voltage transformer for the closed-loop control of the voltage transformer,
- the additional circuit (31) is configured to prevent an increase of the internal voltage provided at the internal node (32) by the voltage transformer of the auxiliary power supply unit (12) during operation to the external voltage provided at the first output (13, 21), and
- the control voltage of the auxiliary power supply unit (12) is slightly lower than a control voltage of the main power supply unit (11) during operation, so that in the operation of the main power supply unit (11), a feed of the common first output (13, 21) is effected by the main power supply unit (11).

2. Closed-loop control circuit according to claim 1,
**characterized in that**
the controlled variable comprises a duty factor that drives the voltage transformer of the auxiliary power supply unit (12), wherein the additional circuit (31) is configured to prevent a drop in the duty factor to 0% independently of the presence of the external voltage.

3. Closed-loop control circuit according to claim 1 or 2,
**characterized by**
a first electrical path (33) that provides an output voltage of the voltage transformer of the auxiliary power supply unit (12) at a first output (13, 21) and a second electrical path (34) that provides the output voltage of the voltage transformer at the internal node (32) of the auxiliary power supply unit (12).

4. Closed-loop control according to claim 1 or 2,
**characterized by**
transformer circuit having a first part (61) that provides a first output voltage of the voltage transformer at the first output (13, 21) and a second part (62) that provides a second output voltage of the voltage transformer at the internal node (32) and a second output (16) of the auxiliary power supply unit (12).

5. Closed-loop control circuit according to one of claims 1 to 4,
**characterized by**
a first voltage divider that divides a voltage between the first output (13, 21) and a common reference potential, and a second voltage divider that divides a voltage between the internal node (32) and the common reference potential.

6. Closed-loop control circuit according to claim 5,
**characterized in that**
the first voltage divider includes a first, second and third resistor element (R4, R5, R3) connected in series between the first output (13, 21) and the common reference potential, and the second voltage divider includes the second and third resistor element (R5, R3) connected in series between the internal node (32) and the common reference potential, wherein the control loop (18) is configured to determine a control voltage between the second and the third resistor element (R5, R3).

7. Closed-loop control circuit according to claim 6,
**characterized in that**
the second voltage divider additionally includes a diode element (D6) connected between the internal node (32) and the second resistor element (R5).

8. Closed-loop control circuit according to one of claims 1 to 7,
**characterized by**
an electrical consumer of the auxiliary power supply unit (12), in particular an internal load of the auxiliary power supply unit (12) or a measuring resistor, which consumer is electrically connected between the internal node (32) and a common reference potential.

9. Power supply unit arrangement (30, 40, 50, 60, 70) including
- at least one main power supply unit (11) that provides at least one first operating voltage that supplies an electrical consumer in a first operating state, and
- at least one auxiliary power supply unit (12) that provides at least one second operating voltage that supplies the electrical consumer in a second operating state, wherein
- the electrical consumer has a lower power in the second operating state than in the first operating state,
- a setpoint voltage of the auxiliary power supply unit (12) is slightly below a control voltage of the main power supply unit (11),
- the at least one first operating voltage of the main power supply unit (11) and the at least one second operating voltage of the auxiliary power supply unit (12) are available to the electrical consumer via a common first output (13, 21) of the power supply unit arrangement (10, 20, 30, 40, 50, 60, 70), and
- the auxiliary power supply unit (12) comprises a closed-loop control circuit according to one of claims 1 to 8.

10. Power supply unit arrangement (30, 40, 50, 60, 70) according to claim 9,
**characterized in that** the main power supply unit (11) comprises a first control circuit (14) and the auxiliary power supply unit (12) has a second control circuit (17) independent of the first control circuit (14).

11. Power supply unit arrangement (30, 60) according to claim 9 or 10,
**characterized by**
a main output formed by the first output (13) that supplies the electrical consumer in the first operating state and the second operating state, wherein, in the first operating state, the first operating voltage of the main power supply unit (11) is provided at the main output, and in the second operating state, the second operating voltage of the auxiliary power supply unit (12) is provided at the main output.

12. Power supply unit arrangement (40, 50, 70) according to claim 9 or 10,
**characterized by**
at least one main output that supplies the electrical consumer in the first operating state and at least one auxiliary output formed by the first output (21) to supply the electrical consumer in the first operating state and in the second operating state, wherein, in the first operating state, the first operating voltage of the main power supply unit (11) is provided at the main output and the auxiliary output and, in the second operating state, the second operating voltage of the auxiliary power supply unit (12) is provided at the auxiliary output.

## Revendications

1. Circuit de régulation pour un bloc d'alimentation auxiliaire (12), comprenant une boucle d'asservissement (18) pour réguler un transformateur de tension du bloc d'alimentation auxiliaire (12) sur une tension de consigne, par le biais d'une tension de commande sur un noeud interne (32) de la boucle d'asservissement (18), une tension produite par le transformateur de tension du bloc d'alimentation auxiliaire (12) étant mise à disposition à un premier noeud (15) qui est en liaison électrique directe avec une première sortie commune (13, 21) pour fournir la tension générée par le bloc d'alimentation auxiliaire (12), la boucle d'asservissement (18) comprenant un circuit auxiliaire (31) qui est configuré pour limiter une variation de la tension de commande au moment où un bloc d'alimentation principal (11) fournit une tension externe à la première sortie commune (13, 21), lorsque la tension externe dépasse la tension de consigne du bloc d'alimentation auxiliaire (12),
**caractérisé en ce que**
- le noeud interne est configuré pour recevoir une tension interne du transformateur de tension du bloc d'alimentation auxiliaire pour réguler le transformateur de tension pendant la marche,
- le circuit auxiliaire (31) est configuré pour empêcher une augmentation de la tension interne fournie pendant la marche par le transformateur de tension du bloc d'alimentation auxiliaire (12) au noeud interne (32) jusqu'à la tension externe mise à disposition à la première sortie (13, 21), et **en ce que**
- la tension de commande du bloc d'alimentation auxiliaire (12) pendant la marche est très légèrement inférieure à une tension de commande du bloc d'alimentation principal (11) de sorte que le bloc d'alimentation principal (11) assure pendant le fonctionnement une alimentation de la première sortie commune (13, 21) par le bloc d'alimentation principal (11).

2. Circuit de régulation selon la revendication 1,
**caractérisé en ce que**
la grandeur de régulation comprend un rapport cyclique pour commander le transformateur de tension du bloc d'alimentation auxiliaire (12), le circuit auxiliaire (31) étant configuré pour empêcher une baisse du rapport cyclique jusqu'à 0 % indépendamment de l'application de la tension externe.

3. Circuit de régulation selon la revendication 1 ou 2,
**caractérisé par**
un premier chemin électrique (33) pour mettre à disposition une tension externe du transformateur de tension du bloc d'alimentation auxiliaire (12) sur une première sortie (13, 21) et un deuxième chemin électrique (34) pour fournir la tension de sortie du transformateur de tension au noeud interne (32) du bloc d'alimentation auxiliaire (12).

4. Circuit de régulation selon la revendication 1 ou 2,
**caractérisé par**
un circuit transformateur avec une première partie (61) pour mettre à disposition une première tension de sortie du transformateur de tension à la première sortie (13, 21) et une deuxième partie (62) pour fournir une deuxième tension de sortie du transformateur de tension au noeud interne (32) et à une deuxième sortie (16) du bloc d'alimentation auxiliaire (12).

5. Circuit de régulation selon l'une quelconque des revendications 1 à 4,
**caractérisé par**
un premier diviseur de tension pour diviser une tension entre la première sortie (13, 21) et un potentiel de référence commun et par un deuxième diviseur de tension pour diviser une tension entre le noeud interne (32) et le potentiel de référence commun.

6. Circuit de régulation selon la revendication 5,
**caractérisé en ce que**
le premier diviseur de tension comprend un premier, un deuxième et un troisième élément de résistance (R4, R5, R3) respectivement branchés en série entre la première sortie (13, 21) et le potentiel de référence commun et **en ce que** le deuxième diviseur de tension comprend le deuxième et le troisième élément de résistance (R5, R3) branchés en série entre le noeud interne (32) et le potentiel de référence commun, la boucle d'asservissement (18) étant configurée pour déterminer une tension de commande entre le premier et le deuxième élément de résistance (R5, R3).

7. Circuit de régulation selon la revendication 6,
**caractérisé en ce que**
le deuxième diviseur de tension comprend par ailleurs un élément de diode (D6) branché entre le noeud interne (32) et le deuxième élément de résistance (R5).

8. Circuit de régulation selon l'une quelconque des revendications 1 à 7,
**caractérisé par**
un consommateur électrique du bloc d'alimentation auxiliaire (12) branché électriquement entre le noeud interne (32) et un potentiel de référence commun, en particulier une charge interne du bloc d'alimentation auxiliaire (12) ou une résistance de mesure.

9. Ensemble bloc d'alimentation (30, 40, 50, 60, 70), comprenant
- au moins un bloc d'alimentation principal (11) pour mettre à disposition au moins une première tension de service dans le but d'alimenter un consommateur électrique dans un premier état de fonctionnement et
- au moins un bloc d'alimentation auxiliaire (12) pour mettre à disposition au moins une deuxième tension de service dans le but d'alimenter le consommateur électrique dans un deuxième état de fonctionnement,
- le consommateur électrique présentant une puissance plus faible dans le deuxième état de fonctionnement que dans le premier état de fonctionnement,
- une tension de consigne du bloc d'alimentation auxiliaire (12) étant très légèrement inférieure à une tension de commande du bloc d'alimentation principal (11),
- l'au moins une première tension de service du bloc d'alimentation principal (11) et l'au moins une deuxième tension de service du bloc d'alimentation auxiliaire (12) étant mises à disposition du consommateur électrique par le biais d'une première sortie commune (13, 21) de l'ensemble bloc d'alimentation (10, 20, 30, 40, 50, 60, 70) et
- le bloc d'alimentation auxiliaire (12) comprenant un circuit de régulation selon l'une quelconque des revendications 1 à 8.

10. Ensemble bloc d'alimentation (30, 40, 50, 60, 70) selon la revendication 9,
**caractérisé en ce que** le bloc d'alimentation principal (11) est présente un premier circuit de commande (14) et le bloc d'alimentation auxiliaire (12) présente un deuxième circuit de commande (17) indépendant du premier circuit de commande (14).

11. Ensemble bloc d'alimentation (30, 60) selon la revendication 9 ou 10,
**caractérisé par**
une sortie principale formée par la première sortie (13) pour alimenter le consommateur électrique dans le premier état de fonctionnement et le deuxième état de fonctionnement, la première tension de service du bloc d'alimentation principal (11) étant mise à disposition à la sortie principale dans le premier état de fonctionnement et la deuxième tension de service du bloc d'alimentation auxiliaire (12) étant mise à disposition à la sortie principale dans le deuxième état de fonctionnement.

12. Ensemble bloc d'alimentation (40, 50, 70) selon la revendication 9 ou 10,
**caractérisé par**
au moins une sortie principale pour alimenter le consommateur électrique dans le premier état de fonctionnement et par au moins une sortie auxiliaire formée par la première sortie (21) dans le but d'alimenter le consommateur électrique dans le premier état de fonctionnement et le deuxième état de fonctionnement, la tension de service du bloc d'alimentation principal (11) étant mise à disposition à la sortie principale et à la sortie auxiliaire dans le premier état de fonctionnement et la deuxième tension de service du bloc d'alimentation auxiliaire (12) étant mise à disposition à la sortie auxiliaire dans le deuxième état de fonctionnement.
